# EUROPEAN PATENT SPECIFICATION

(11) **EP 2 483 101 B1**
(45) Date of publication and mention of the grant of the patent: **18.06.2014**
(21) Application number: 10782369.2
(22) Date of filing: 30.09.2010
(51) Int. Cl.: B60M 3/00, B60M 5/00, B61L 1/00

(54) **A SYSTEM FOR THE REMOTE CONTROLLING OF ELECTROMECHANICAL APPARATUSES IN STREET RAILWAYS LINES, AND THE LIKE**
SYSTEM ZUR FERNSTEUERUNG VON ELEKTROMECHANISCHEN GERÄTEN AUF STRASSENBAHNSCHIENEN UND DERGLEICHEN
SYSTÈME DE COMMANDE À DISTANCE D'APPAREILS ÉLECTROMÉCANIQUES DANS DES LIGNES DE TRAMWAY ET SIMILAIRES

(30) Priority: 01.10.2009 IT RM20090501
(43) Date of publication of application: 08.08.2012
(73) Proprietor: Balfour Beatty Rail S.P.A., 20141 Milano (IT)
(72) Inventor: STEFANONI, Massimo, I-20141 Milano (IT); TANZI, Paolo, I-20141 Milano (IT)
(74) Representative: Leone, Mario
(86) International application number: PCT/IB2010/002484
(87) International publication number: WO 2011/039621

(56) References cited:
- EP-A1- 1 167 112
- EP-A1- 1 550 575
- EP-A1- 2 052 942
- EP-A2- 1 552 998
- CN-A- 1 524 726
- DE-A1- 3 627 971
- FR-A1- 2 825 666
- FR-A1- 2 871 744

## Description

### Field of invention

The present invention relates to a system for the power supplying and the remote controlling of electromechanical apparatuses of street railways lines, and more specifically to a system for the power supply and the remote control of electromechanical apparatuses of street railways lines wherein the use of supercapacitors it is provided.

### Prior Art

Up to now, the function of the different apparatuses in street railways lines is achieved through conventional wiring between operating units (e.g., switches) and auxiliary power supplies, such as electrical substations, UPS, or battery systems.

In such systems, the necessary reserve of additional power, responsible for the operation of the different apparatuses, is guaranteed by means of batteries.

This structural arrangement involves, however, some drawbacks.

For example, the contacting line of a streetcar or a trolley bus is normally divided into electrically separate sections, each section being powered by a substation. In the case of out of service of a single sub-station, the contacting line has to be connected to the adjacent one by hand-operated switches. This manual operation may involve the inconvenience of long reconfiguration times.

In addition, the mechanisms for controlling of switches and relevant remote controls must be fed individually, being not possible the connection thereof to a low voltage supply.

Therefore, for the already existing installations for trolleybus and streetcars there is another drawback due to the fact that it is necessary to create ducts along the lines thereof for the laying of electric cables in order to supply power and remote controlling said switches.

Moreover, there is further drawback in that in the case of upgrading existing networks such as buses and trolleys lines in downtown/urban areas, the latter normally are not liable to incorporate ducts for the laying of cables for the remote power, therefore the laying of said cables lines would still be difficult to achieve.

***On the other hand, in the art it is already known*** DE 36 27 971 A1 ***(LICENTIA GmbH) published on 25 February 1988, which discloses an arrangement for controlling catenary disconnecting switches, whereby the arrangement provides respective driving line disconnectors, each disconnector being connected via a linkage to a drive motor, and being connected via at least two lines to a control part, and further comprising securing elements for the drive motor, at least one switch for applying power to the drive motor, and manually operable elements for the control of said switch, and elements for indicating the operating state of the contact line switch, further comprising fuse elements, and wherein each of the control parts of several drive motors comprises a remote control substation which is each connected to a central station.***

***It is also known from the state of the art*** EP 1 552 998 A2 ***(ELETTROMECCANICA CM SRL) published on 13 July 2005, which discloses a system for the diagnosis and operation of apparatuses for generating and distributing power supplies, in particular for railway's safety and signalling plants, the system foresees a plurality of peripheral units provided with means for connecting to a power supply device, and means for detecting the efficiency of the controlled device and capable to feed a signal relating to any detected defect.***

***Further, it is also known from the state of the art*** EP 1 550 575 A1 ***(ALSTOM) published on 6 July 2005, which discloses a system and station for the power supply to a catenary, and process of interruption of such power supply, which foresees three power supply stations to a catenary, and generators for transmitting control signals through the catenary. Each station has a receiver to receive the control signals transmitted via the catenary and to control interruption of the power supply of one portion of the catenary based on the control signals. Tehre is also disclosed a method of interruption of power supply of a portion of the failed catenary.***

***All of the above described systems have the drawback of not allowing the power supplying to low voltage auxiliary circuits in a autonomous manner, by deriving directly the power supply to said auxiliary services from the power supply of said contacting lines relevant to trolleybus, streetcars, and*/*or subways. Further, the above systems do not allow a remote control of both the power supply devices and the electromechanical apparatus related to the former, in an independent manner from the power supplies by means of wiring power systems and*/*or remote stations.***

### Brief description of the invention

The aim of the present invention is to solve the above drawbacks by providing a system and an apparatus for the power supplying and the remote controlling of electromechanical apparatuses in street railways lines and the like, the system allowing the power supplying to low voltage auxiliary circuits in a autonomous manner, by deriving directly the power supply to said auxiliary services from the power supply of said contacting lines relevant to trolleybus, streetcars, and/or metros themselves.

Another object of the present invention is to provide an apparatus for the power supplying and the remote controlling of electromechanical apparatuses in street railways lines and the like, that provides a remote control of both the power supply device and the electromechanical apparatus related to it, and not depending on conventional power supplies by means of wiring power systems and/or remote stations.

Thus, the present invention provides a system for the power supplying and the remote controlling of electromechanical apparatuses in street railways lines and the like substantially according to the appended claims.

### Brief Description of Figures

A detailed description of a preferred embodiment of a system for the power supplying and the remote controlling which comprises apparatuses for the remote power supplying and the remote controlling according to the present invention will now be given, given as an example and without limiting, by referring to the annexed drawings, wherein:
Figures 1A and 1B are schematic overall views a streetcar line which comprises the system and apparatuses of the present invention;
Figure 2 is a schematic view of a circuit diagram of the system of Figures 1A and 1B;
Figure 3 is a graph showing the current values over time, with reference to an actuator for a driven line switch;
Figures 4 is a table showing the characteristic values of a supercapacitor included within the apparatus of the present invention;
Figure 5 is a graph showing the electrical characteristics of the supercapacitor of Figure 4, and
Figure 6 is a schematic view that shows the function of the system during the controlling of a plurality of apparatuses, according to the present invention.

### DETAILED DESCRIPTION OF THE PRESENT EMBODIMENT

It should be noted here that the following embodiment of the present invention refers to a power supplying and remote controlling for a streetcar line. Obviously, the present invention is not limited to this example.

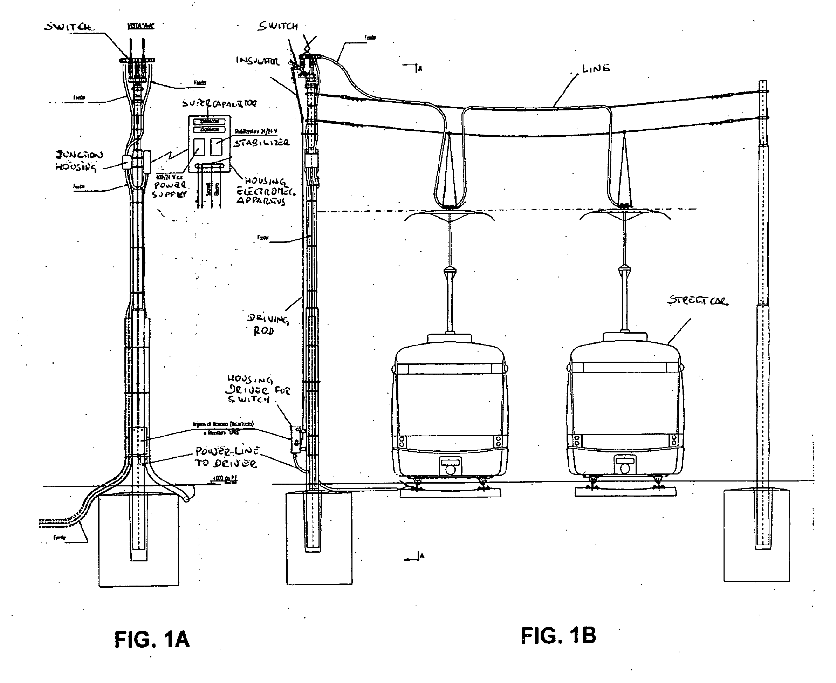

Referring now to Figures 1A and 1B there is illustrated schematically the structural arrangement for the system according to the present invention, which incorporates one or more apparatuses for the remote controlling (the figures show only one of.them), and referred to a streetcar line.

As can be seen in the figures, the line is equipped with driven switches, the latter being remote controlled via remote drive of the streetcar.

The operating mechanism of the switches and the remote control thereof is powered independently. According to the present invention, the power supply is provided by the contacting line, but through a 600/24 V DC converter.

In the case of out of order of the contacting line, all the apparatuses are powered by energy which has been stored in high-capacity capacitors (SuperCapacitor) contained therein.

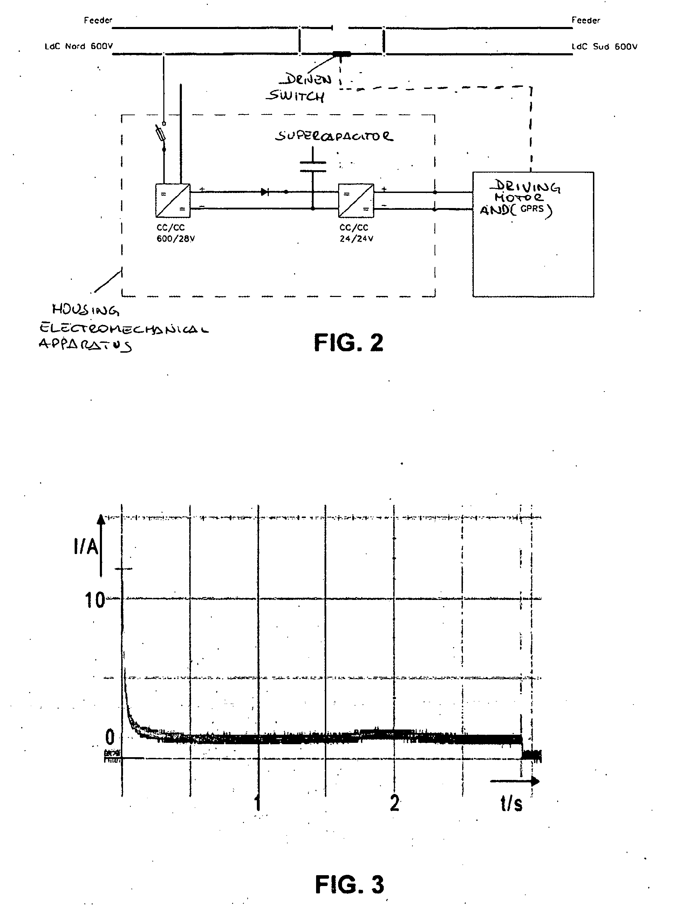

With reference now to Figure 2, there is shown therein the circuit diagram of operating for the storage of power to be supplied to the apparatuses for the control of the driven switches and the remote control thereof, according to the present invention.

According to the arrangement of the present invention, during normal operation the voltage is taken from the contacting line and it is lowered to 28 V via a DC/DC converter, the latter provides for charging the batteries incorporating supercapacitors (see Fig 1A and Fig 2).

The apparatus is protected from incoming surges that might come from the line by means of a fuse incorporating switching signal and a Suppressor Varistor-Zinc Oxide.

The power supply of all different apparatuses is 24 V, so the 28 V output is connected to a second converter/stabilizer that provides a constant voltage of 24 V during the capacitor discharging period.

The capacity of the capacitor is sized to provide power to the remote control for 30 to 40 minutes, and for carrying out at least five operations of the switch itself.

As can be understood in Fig 1A and Fig 2, this power system is installed in a housing made of insulated material placed on the pole and alongside the junction housing where the power is to be derived from the 600V power supply. It is also necessary to make a physical link to the track in order to close the circuit on the negative.

The housing comprises the following devices:
1) Fuse breaker, fuse with a remote signal;
2) Suppressor Varistor-Zinc Oxide (for example, the type Z60M911 CKE);
3) Converter 600/28V (e.g., PSC-type series DC/DC 100-150W 1 to 3 Outputs);
4) Battery Supercapacitors (for example, the type BMOD BC Energy Series 15 V BOOSTCAP ® Ultracapacitors of Maxwell Technologies);
5) Converter / Stabilizer 100W-24/24V; and
6) Switch and terminals as necessary.

With reference to figure 1A and 1B, for what concerns the sizing of the switches, the invention provides that said switches be of the double interruption type; 1kVcc - 2kA, with a drive (driven by 24VDC motor), and the drive is connected to a properly insulated driving rod.

It is also possible to operate said switches locally on emergency, the operating being both electrically or manually.

According to this embodiment, the electrical characteristics of the driving motor of the switch will be as follows:

| | |
|---|---|
| **DEVICES AND CONTROLS** | **24V DC (+10,-20 %)** |
| **ELECTRIC MOTOR** | **24V DC (+10,-20 %)** |
| **ANTICONDENSATION COIL** | **24V DC (+10,-15 %)** |
| **EL. MOTOR - Start** | **< 26,6 A** |
| **EL. MOTOR - Function for 2,9 s** | **< 5,2 A** |
| **ANTICONDENSATION COIL** | **< 0,85 A** |

Figure 3 shows a graph of Current (I) versus Time (s) relating to the sizing parameters above indicated.

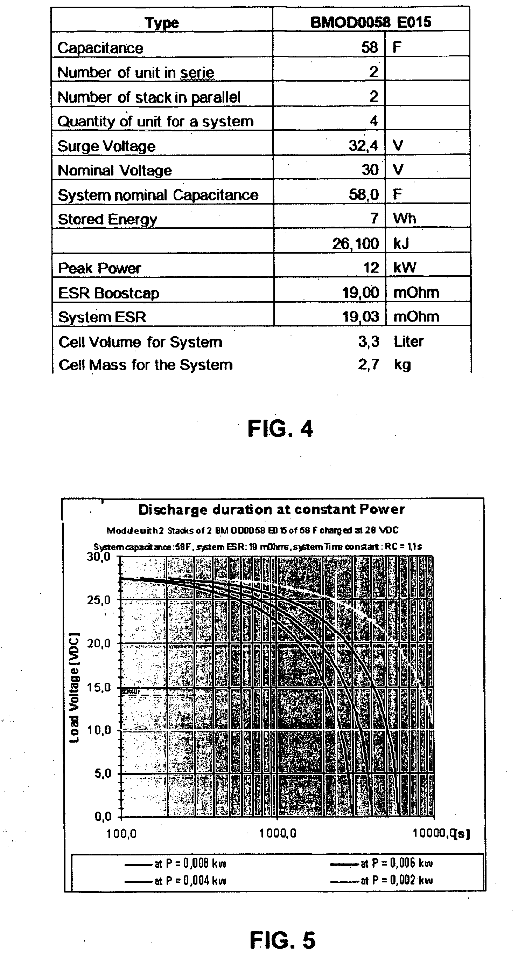

Referring now to Figures 4 and 5, there is shown therein the sizing parameters of the supercapacitor according to the embodiment of the present invention.

According to the electrical characteristics (power and energy) as above shown, it has been identified as an optimal solution the use of 4 banks of capacitors type BMOD0058E015, connected in series and in parallel with the electrical characteristics listed as in the table in Figure 4, and according to the charts of Figure 5.

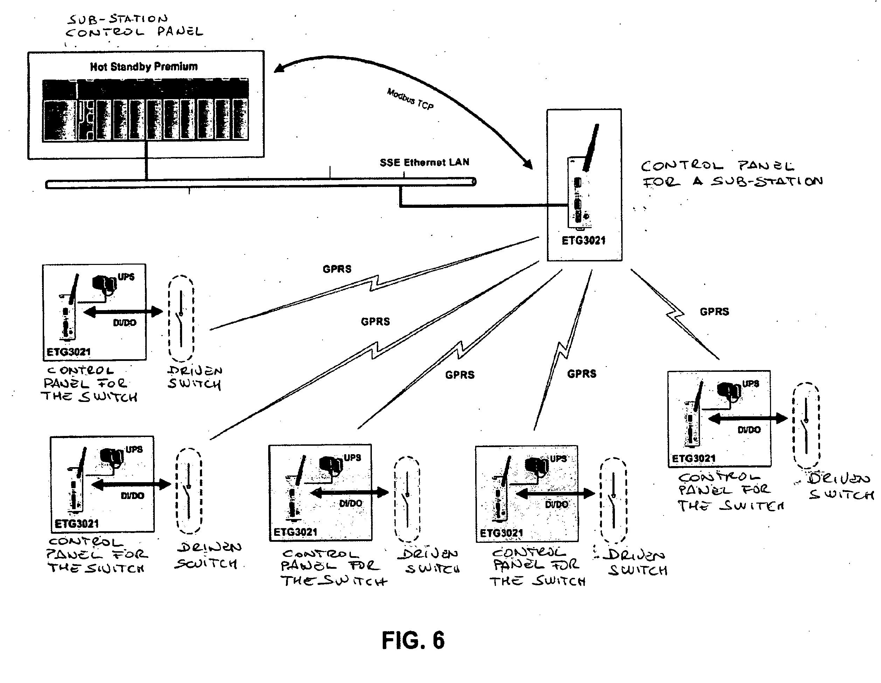

With reference now to Figure 6 and according to the present invention, it is provided that all switches are operated remotely in a group arrangement and by means of remote control.

For example, as shown in Figure 6, there is shown therein the controlling of five remote-controlled switches, each depending to an Electrical Traction Control System (DOTE) of a single station. The connection is made by plotting the signals of each switch directly to the acquiring node placed in referenced substation.

The network for the remote controlling of a plurality of substations is shown in the figure. For each switch will be controlled the following digital signals:
- 2 DI (relevant to the switch status)
- 2 DO (relevant to the control of the switches)
- 4 DI ( relevant to switch alarms and / or power system alarms).

According to the present embodiment, the system foresees the use of a control device (for example, a control device as the ETG3021 Schneider) placed inside the housing of the switch, the control device being addressed for the management of the signals I/O, and for realizing the communication via a GPRS connection.

According to the system of the present invention, there are provided similar devices in all substations, in order to communicate on the LAN and according to the schematic diagram shown in this Figure 6.

Further, a PLC related to a substation will make all queries to all control devices (ETG3021) in order to obtain data acquisition and the management of all controls.

The control device (ETG3021) is also designed to provide via a web-link the status of several connected switches.

The apparatus and the system of the present invention has many advantages, both in terms of structural arrangement and management thereof.

The present system allows a full availability of the control switches remotely, requires no special maintenance, and provides an operating range of -40 °C to +65 °C, equivalent to 10 years of useful life.

During the making of new installations for trolleybus and streetcars, unlike conventional systems, it is not longer necessary to create ducts along the line nor it is necessary to install cables for the power supplying and remote controlling of driven switches.

Further, the system and the apparatus of the present invention is particularly advantageous for upgrading of existing networks (such as trolleys and streetcars in downtown/urban areas) wherein the laying of further cables for power supply circuits and remote control circuits it is not allowed, and wherein the making of said laying of cable lines would still be difficult to achieve.

Thanks to the apparatus of the present invention it is possible to install driven loaded switches, instead of the standard manual switches.

In the case of out of order of the contacting line, the apparatuses are powered by energy stored in high-capacity capacitors (Super Capacitors).

The system and the apparatus of the present invention provides for quick installation and connecting time, in commissioning activities.

Moreover, by providing supercapacitors instead of batteries related difficulties to the latter are avoided, such as a limited life and high maintenance costs.

There is no cable laying and no relevant building construction included.

The invention provides a wide communication range (distance) between apparatus and the place for the control panel.

## Claims

1. A system for the remote controlling of a plurality of electromechanical apparatuses for the power supply to streetcars, trolleybus lines, and the like, the system being **characterized in that**
each electromechanical apparatus for the power supplying and the remote controlling comprises fuse and protection means; suppressor-varistor means; voltage conversion means; energy storing means, and converting/stabilizing means, wherein a plurality of driven line switches are provided, said plurality of switches being remote-controlled via remote control and controlled through said plurality electromechanical apparatuses,
and wherein
- each electromechanical apparatus is associated to a respective remote controlling device,
- said energy storing means are high-capacity supercapacitors, and
- said plurality of switches and said plurality of electromechanical apparatuses for the power supplying and the remote controlling are remotely controlled in groups by means of a remote control and a wireless network for the remote management thereof.

2. System for the remote controlling of a plurality of electromechanical apparatuses for the power supply to streetcars, trolleybus lines, and the like, according to the preceding claim, wherein each remote controlling device communicates via GPRS or similar connection, wherein said wireless network further includes a LAN, wherein said wireless network further includes a sub-station PLC for the direct querying of different control devices, data acquisition, and management of said controls, and wherein the control devices provide the status of said switches via web connections.

3. System for the remote controlling of a plurality of electromechanical apparatuses for the power supply to streetcars, trolleybus lines, and the like, according to the preceding claim, wherein said protection and fuse means comprises:
- Fuse breaker, and
- Remote signal Fuse.

4. System for the remote controlling of a plurality of electromechanical apparatuses for the power supply to streetcars, trolleybus lines, and the like, according to the preceding claim, wherein said suppressor-varistor means comprises at least one zinc-oxide Suppressor- Varistor.

5. System for the remote controlling of a plurality of electromechanical apparatuses for the power supply to streetcars, trolleybus lines, and the like, according to the preceding claim, wherein said voltage conversion means comprises a voltage converter 600/28V.

6. System for the remote controlling of a plurality of electromechanical apparatuses for the power supply to streetcars, trolleybus lines, and the like, according to the preceding claim, wherein said converting/stabilizing means comprises at least one Converter/Stabilizer 100W-24/24V.

7. System for the remote controlling of a plurality of electromechanical apparatuses for the power supply to streetcars, trolleybus lines, and the like, according to the preceding claim, wherein each electromechanical apparatus for the power supplying and remote controlling further comprises a housing made of insulated material.

8. System for the remote controlling of a plurality of electromechanical apparatuses for the power supply to streetcars, trolleybus lines, and the like, according to the preceding claim, wherein the power supply to said plurality of electromechanical apparatuses is supplied from the contacting line through a 600/24 V DC converter.

9. System for the remote controlling of a plurality of electromechanical apparatuses for the power supply to streetcars, trolleybus lines, and the like, according to the preceding claim, wherein said switches are double break switch type, 1kVcc - 2kA, with motorized driving and control through properly insulated rod.

10. System for the remote controlling of a plurality of electromechanical apparatuses for the power supply to streetcars, trolleybus lines, and the like, according to the preceding claim, wherein said switches are operable either electrically or manually.

## Patentansprüche

1. System zur Fernsteuerung einer Mehrzahl von elektromechanischen Vorrichtungen für die Stromversorgung zu Straßenbahnen, Trolleybus-Leitungen und dergleichen, wobei das System **dadurch gekennzeichnet ist, dass**
jede elektromechanische Vorrichtung für die Stromversorgung und die Fernsteuerung umfasst: Sicherungs- und Schutzmittel; Unterdrücker-Varistor Mittel; Spannungswandlungsmittel; Energiespeichermittel und Umwandlungs- / Stabilisierungsmittel, wobei eine Mehrzahl von angetriebenen Leitungsschaltern vorgesehen ist, wobei die Mehrzahl von Schaltern über Fernbedienung ferngesteuert wird und durch die Mehrzahl elektromechanischer Vorrichtungen gesteuert wird,
und wobei
- jede elektromechanische Vorrichtung einem jeweiligen Fernsteuergerät zugeordnet ist,
- die Energiespeichermittel hoch-Kapazität-Superkondensatoren sind, und
- die Mehrzahl von Schaltern und die Mehrzahl elektromechanischer Vorrichtungen für die Stromversorgung und die Fernsteuerung in Gruppen durch eine Fernbedienung und ein drahtloses Netzwerk für die Fernverwaltung davon ferngesteuert werden.

2. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei jedes Fernsteuergerät über GPRS oder ähnliche Verbindung kommuniziert, wobei das drahtlose Netzwerk weiterhin ein LAN umfasst, wobei das drahtlose Netzwerk weiterhin eine Unterstation PLC für die direkte Abfrage unterschiedlicher Steuergeräte, Datenerfassung und Management der Steuerungen umfasst und wobei die Steuergeräte den Status der Schalter über Web-Verbindungen bereitstellen.

3. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Schutz- und Sicherungsmittel umfassen:
- Sicherungsunterbrecher, und
- Fernsignal-Sicherung.

4. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Unterdrücker-Varistor-Mittel zumindest einen Zinkoxid Unterdrücker-Varistor umfassen.

5. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Spannungswandlungsmittel einen Spannungswandler 600/28V umfassen.

6. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Umwandlungs- / Stabilisierungsmittel zumindest einen Umwandler/Stabilisator 100W-24/24V umfassen.

7. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei jede der elektromechanischen Vorrichtungen für die Stromversorgung und Fernsteuerung weiterhin ein Gehäuse umfasst, das aus isoliertem Material hergestellt ist.

8. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Stromversorgung zu der Mehrzahl von elektromechanischen Vorrichtungen von der Kontaktleitung durch einen 600/24V DC-Wandler bereitgestellt wird.

9. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Schalter der Doppelunterbrecher Schalterart sind, 1kVcc - 2kA, mit motorisiertem Antrieb und Steuerung durch ordnungsgemäß isolierten Stab.

10. System zur Fernsteuerung einer Mehrzahl elektromechanischer Vorrichtungen für die Stromversorgung zu Straßenbahnen, Trolleybus-Leitungen und dergleichen, gemäß dem vorstehenden Anspruch, wobei die Schalter entweder elektrisch oder manuell betätigbar sind.

## Revendications

1. Système pour la commande à distance d'une pluralité d'appareils électromécaniques pour l'alimentation en énergie de tramways, de lignes de trolleybus, et analogues, le système étant **caractérisé en ce que**
chaque appareil électromécanique pour l'alimentation en énergie et la commande à distance comprend des moyens de protection et de fusible, des moyens de varistance-suppresseur, des moyens de conversion de tension, des moyens de stockage d'énergie, et des moyens de conversion/stabilisation, dans lequel une pluralité de commutateurs de ligne entraînés sont prévus, ladite pluralité de commutateurs étant commandés à distance par l'intermédiaire d'une commande à distance et commandés à travers ladite pluralité d'appareils électromécaniques,
et dans lequel
- chaque appareil électromécanique est associé à un dispositif de commande à distance respectif,
- lesdits moyens de stockage d'énergie sont des supercondensateurs à haute capacité, et
- ladite pluralité de commutateurs et ladite pluralité d'appareils électromécaniques pour l'alimentation en énergie et la commande à distance sont commandés à distance dans des groupes par l'intermédiaire d'une commande à distance et un réseau sans fil pour leur gestion à distance.

2. Système pour la commande à distance d'une pluralité d'appareils électromécaniques pour l'alimentation en énergie de tramways, de lignes de trolleybus, et analogues, selon la revendication précédente, dans lequel chaque dispositif de commande à distance communique par l'intermédiaire d'une connexion GPRS ou similaire, dans lequel ledit réseau sans fil comprend en outre un réseau local, dans lequel ledit réseau sans fil comprend en outre un automate programmable de sous-station pour l'interrogation directe de différents dispositifs de commande, l'acquisition de données et la gestion desdites commandes, et dans lequel les dispositifs de commande fournissent l'état desdits commutateurs par l'intermédiaire de connexions Internet.

3. Système pour la commande à distance d'une pluralité d'appareils électromécaniques pour l'alimentation en énergie de tramways, de lignes de trolleybus et analogues, selon la revendication précédente, dans lequel lesdits moyens de protection et de fusible comprennent :
- un disjoncteur fusible, et
- un fusible de signal à distance.

4. Système pour la commande à distance d'une pluralité d'appareils électromécaniques pour l'alimentation en énergie de tramways, de lignes de trolleybus et analogues, selon la revendication précédente, dans lequel lesdits moyens de varistance-suppresseur comprennent au moins une varistance-suppresseur d'oxyde de zinc.

5. Système pour la commande à distance d'une pluralité d'appareils électromécaniques pour l'alimentation en énergie de tramways, de lignes de trolleybus et analogues, selon la revendication précédente, dans lequel lesdits moyens de conversion de tension comprennent un convertisseur de tension 600/28V.

6. Système pour la commande à distance d'une pluralité d'appareils électromécaniques pour l'alimentation en énergie de tramways, de lignes de trolleybus et analogues, selon la revendication précédente, dans lequel lesdits moyens de conversion/stabilisation comprennent au moins un convertisseur/stabilisateur 100W-24/24V.

7. Système pour la commande à distance d'une pluralité d'appareils électromécaniques pour l'alimentation en énergie de tramways, de lignes de trolleybus et analogues, selon la revendication précédente, dans lequel chaque dispositif électromécanique pour l'alimentation en énergie et la commande à distance comprend en outre un boîtier en matériau isolant.

8. Système pour la commande à distance d'une pluralité d'appareils électromécaniques pour l'alimentation en énergie de tramways, de lignes de trolleybus et analogues, selon la revendication précédente, dans lequel l'alimentation en énergie de ladite pluralité d'appareils électromécaniques est fournie à partir de la ligne de contact à travers un convertisseur en courant continu 600/24 V.

9. Système pour la commande à distance d'une pluralité d'appareils électromécaniques pour l'alimentation en énergie de tramways, de lignes de trolleybus et analogues, selon la revendication précédente, dans lequel lesdits commutateurs sont du type à double interrupteur de coupure, 1kVcc-2kA, avec l'entraînement et la commande motorisés à travers une tige bien isolée.

10. Système pour la commande à distance d'une pluralité d'appareils électromécaniques pour l'alimentation en énergie de tramways, de lignes de trolleybus et analogues, selon la revendication précédente, dans lequel lesdits commutateurs peuvent être actionnés électriquement ou manuellement.
